# EUROPÄISCHE PATENTANMELDUNG

(11) **EP 3 486 713 A1**
(43) Veröffentlichungstag der Anmeldung: **22.05.2019**
(21) Anmeldenummer: 18204622.7
(22) Anmeldetag: 06.11.2018
(51) Int. Cl.: G02C 11/02

(54) **ZIERELEMENT FÜR EIN BRILLENGESTELL**

(30) Priorität: 21.11.2017 DE 202017107046 U; 16.02.2018 DE 202018100875 U; 23.10.2018 EP 18201923
(71) Anmelder: Hacikoglu, Murad, 77694 Kehl (DE)
(72) Erfinder: Hacikoglu, Murad, 77694 Kehl (DE)
(74) Vertreter: Patentanwälte Walther Hinz Bayer PartGmbB

(57) **Zusammenfassung**

Gegenstand der Erfindung ist ein Zierelement für ein Brillengestell einer Brille, wobei das Zierelement (10, 11, 12, 13) lösbar an dem Brillengestell anordbar ist.

## Beschreibung

Die vorliegende Erfindung betrifft ein Zierelement für ein Brillengestell einer Brille sowie eine Brille mit mindestens einem Zierelement.

Brillen mit Brillengestell sind aus dem Stand der Technik hinreichend bekannt. Das Brillengestell umfasst üblicherweise eine Fassung zur Aufnahme der Gläser, sowie zwei Ohrbügel zur Fixierung des Brillengestells am Kopf.

Nun sind Brillengestelle in den unterschiedlichsten Ausführungsformen bekannt, sodass eine Brille häufig nicht nur auf ihre Funktion reduziert wird, sondern gleichzeitig auch ein Modeaccessoire ist. Insofern ist nicht ungewöhnlich, wenn Menschen mehrere Brillen haben, um die entsprechende Brille bei einem vorgegebenen Anlass zu tragen.

Brillen, insbesondere Brillengestelle aber auch die Gläser, können verhältnismäßig teuer sein, sodass der Anzahl von Brillen häufig aus finanziellen Gründen Grenzen gesetzt sind.

Dennoch besteht ein hohes Interesse daran, eben weil eine Brille auch ein Accessoire, insbesondere auch ein modisches Accessoire ist, eine solche Brille zu den verschiedensten, unterschiedlichsten Anlässen, angepasst an die Anlässe, zu tragen.

Um dies zu bewerkstelligen, wird erfindungsgemäß vorgeschlagen, das Zierelement lösbar an dem Brillengestell anzuordnen. Solche Zierelemente können in diesem Sinne beispielsweise aufclipsbar, aufschiebbar oder magnetisch mit dem Brillengestell verbindbar sein. Im Einzelnen kann ein Zierelement als eine Leiste ausgebildet sein, als ein Bügel, als ein Knopf oder ähnliches, die mit dem Brillengestell lösbar verbindbar sind.

Grundsätzlich ist nun bekannt, dass die Ohrbügel von Brillen stark unterschiedliche Größen haben. Das heißt, dass sich Ohrbügel sowohl hinsichtlich ihrer Höhe als auch hinsichtlich ihrer Breite unterscheiden können. Ein weiteres Ziel der Erfindung besteht nun darin, leistenförmige Zierelemente bereitzustellen, die auf unterschiedlich großen Ohrbügeln Halt finden. Das heißt, dass ein leistenförmiges Zierelement mit im Querschnitt unterschiedlich großen Ohrbügeln verbunden werden kann.

In diesem Zusammenhang ist vorgesehen, dass das leistenförmige Zierelement durch mindestens ein Federelement mit dem Ohrbügel in Verbindung steht. Das heißt, dass durch das Federelement ein zwischen der Innenseite des leistenförmigen Zierelementes und der Außenseite des Ohrbügels bestehender Abstand überbrückt werden kann, sodass das leistenförmige Zierelement durch den Ohrbügel sicher aufnehmbar ist.

In diesem Zusammenhang ist vorteilhaft vorgesehen, dass das mindestens eine Federelement sich längs des leistenförmigen Zierelementes auf der Innenseite des Zierelementes erstreckt. Hierbei umfasst das leistenförmige Zierelement den Ohrbügel formschlüssig, wobei das leistenförmige Zierelement mindestens eine Breitseite aufweist, die mit den beiden einander gegenüberliegenden schmalen Seiten verbunden ist. Auf der Innenseite des auf dem Ohrbügel angeordneten leistenförmigen Zierelementes kann vorgesehen sein, dass das Zierelement nicht die volle Breitseite des Ohrbügels erfasst, sondern quasi C-förmig ausgebildet ist, um so die Möglichkeit zu schaffen, dass das Zierelement nicht nur auf den Ohrbügel aufzuschieben, sondern auch seitlich aufzuclipsen, wenn, wie bereits erläutert, auf der Innenseite des Ohrbügels, also der Seite des Ohrbügels, der dem Kopf zugewandt ist, das leistenförmige Zierelement den Ohrbügel lediglich partiell umgreift.

Nach einem weiteren vorteilhaften Merkmal der Erfindung kann vorgesehen sein, dass das mindestens eine Federelement innen auf der Breitseite und/oder der Schmalseite des leistenförmigen Zierelementes angeordnet ist. Hieraus wird deutlich, dass das Federelement sowohl auf der Schmalseite des Ohrbügels aufsitzen kann, als auch auf der Breitseite, oder jeweils auf der Schmal- und auf der Breitseite des Ohrbügels. Um das leistenförmige Zierelement gegenüber dem Ohrbügel vorzuspannen, ist vorgesehen, dass das Federelement mindestens eine Kontaktstelle zum Ohrbügel aufweist, wobei an der Kontaktstelle das Federelement einen Puffer aus elastisch nachgiebigem Material, z. B. Schaumstoff oder Gummi aufweist, um eine unbeabsichtigte Verschiebung des leistenförmigen Zierelementes auf dem Ohrbügel zu verhindem. Ein solches Federelement, das vorteilhaft bogenförmig elastisch vorgespannt ist, ist nach einem weiteren Merkmal der Erfindung als Blattfeder ausgebildet.

Denkbar ist in diesem Zusammenhang ebenfalls nach einer anderen Ausführungsform, das Federelement als Federspange auszubilden, die an der Längskante des als Leiste ausgebildeten Zierelements angeordnet ist und die in Eingriff mit dem Ohrbügel der Brille bringbar ist. Die Federspange kann hierbei vorteilhaft vom Zierelement abklappbar ausgebildet sein, was bedeutet, dass zur Fixierung am Ohrbügel zunächst die Federspange abgeklappt wird, um dann, wenn das leistenförmige Zierelemente am Ohrbügel anliegt, aufgrund der Federkraft zurückzuschnappen, um hierdurch eine stabile Verbindung zwischen dem leistenförmigen Zierelement einerseits und dem Ohrbügel andererseits bereitzustellen. Es bleibt in diesem Zusammenhang darauf hinzuweisen, dass nicht lediglich nur eine Federspange, sondern mehrere hintereinander angeordnete Federspangen vorgesehen sein können.

Vorteilhaft kann hierbei die Federspange zur Anlage an dem Ohrbügel mindestens einen Vorsprung aufweisen, um bei Anlage an dem Ohrbügel, diesen sicher erfassen zu können. Vorteilhaft ist in diesem Zusammenhang ebenfalls, wenn an der anderen Längskante des als Leiste ausgebildeten Zierelements eine klammerartige Lasche zum erfassen des Ohrbügel angeordnet ist. Das heißt, dass das Zierelement auf der einen unteren Längskante die Federspange aufweist und auf der anderen gegenüberliegenden oberen Längskante die klammerförmige Lasche. Hieraus wird deutlich, dass im abgeklappten Zustand der Federspange zunächst das Zierelement mit der klammerartigen Lasche auf den Ohrbügel aufgesetzt wird, alsdann die abgeklappte Federspange losgelassen wird, wobei diese dann an von innen den Ohrbügel ergreift. Hierdurch ist ein absolut sicherer Sitz des Zierelements am Ohrbügel gewährleistet.

Gegenstand der Erfindung ist ebenfalls eine Brille mit einem Brillengestell, das sich durch mindestens ein lösbar oder abnehmbar angeordnetes Zierelement der zuvor beschriebenen Art auszeichnet.

Anhand der Zeichnungen wird die Erfindung nachstehend beispielhaft näher erläutert.
- Fig. 1: zeigt das Brillengestell in einer Draufsicht;
- Fig. 2: zeigt eine Ansicht gemäß der Linie II-II aus Fig. 1;
- Fig. 3: zeigt eine Ansicht gemäß der Linie III-III aus Fig. 1;
- Fig. 4a: zeigt den Ohrbügel der Brille in einer Seitenansicht mit einem Zierelement;
- Fig. 4b: zeigt die Aufnahme eines leistenförmigen Zierelementes in einer T-förmigen Nut des Ohrbügel;
- Fig. 4c: zeigt ein leistenförmiges Zierelement, das auf den Ohrbügel aufgeclipst ist;
- Fig. 4d: zeigt die Verbindung eines leistenförmigen Zierelementes mit dem Ohrbügel mittels Magneten;
- Fig. 4e: zeigt eine druckknopfähnliche Fixierung des leistenförmigen Zierelementes an dem Ohrbügel.
- Fig. 5a: zeigt einen Schnitt durch den Ohrbügel einschließlich des leistenförmigen Zierelementes;
- Fig. 5b: zeigt eine Ansicht gemäß der Linie Vb/Vb aus Fig. 5a;
- Fig. 6a: zeigt einen Schnitt durch einen Ohrbügel einschließlich des leistenförmigen Zierelementes;
- Fig. 6b: zeigt einen Schnitt gemäß der Linie VIb/VIb aus Fig. 6a;
- Fig. 7a: zeigt einen Schnitt durch einen Ohrbügel einschließlich des leistenförmigen Zierelementes;
- Fig. 7b: zeigt von oben eine Ansicht auf den Ohrbügel gemäß Fig. 7a;
- Fig. 8: zeigt perspektivisch die Fixierung des als Leiste ausgebildeten Zierelements am Ohrbügel mittels einer Federspange und einer klammerartigen Lasche.

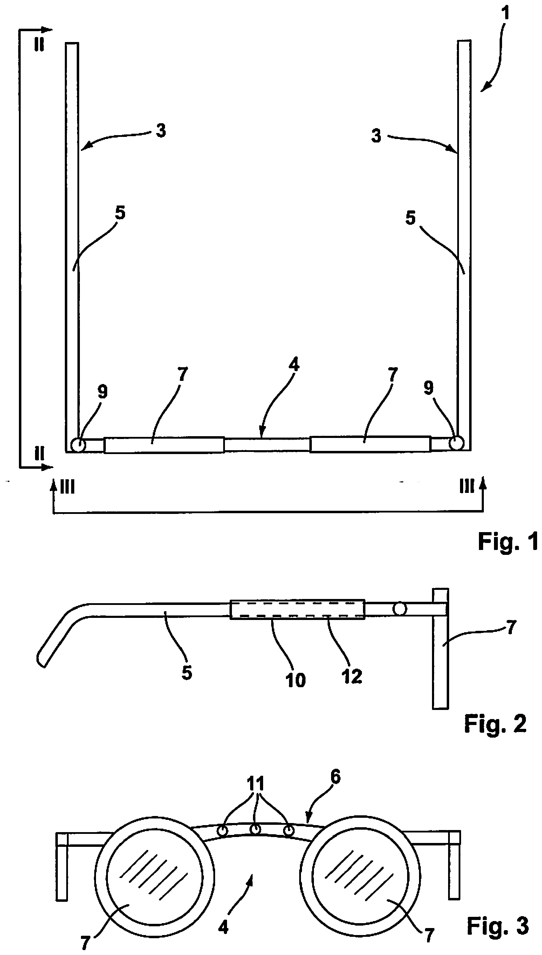

Die insgesamt mit 1 bezeichnete Brille umfasst das Brillengestell 3 mit der Fassung 4 und den insgesamt mit 5 bezeichneten Ohrbügel. Die beiden Ohrbügel sind mit der Fassung zur Aufnahme der Brillengläser 7, beispielsweise durch Scharniergelenke 9, verbunden sind. Fig. 2 zeigt die Brille in einer Seitenansicht, wobei der Ohrbügel 5 ein Zierelement 10, 12 aufweist. Aus der Darstellung gemäß Fig. 3 ergibt sich, dass das Brillengestell 3 mit dem Steg 6 als Teil der Fassung zwischen den beiden Gläsern runde Zierelemente 11 aufweist, die beispielsweise mittels Magneten mit dem Steg 6 verbunden oder z. B. eingeclipst sind.

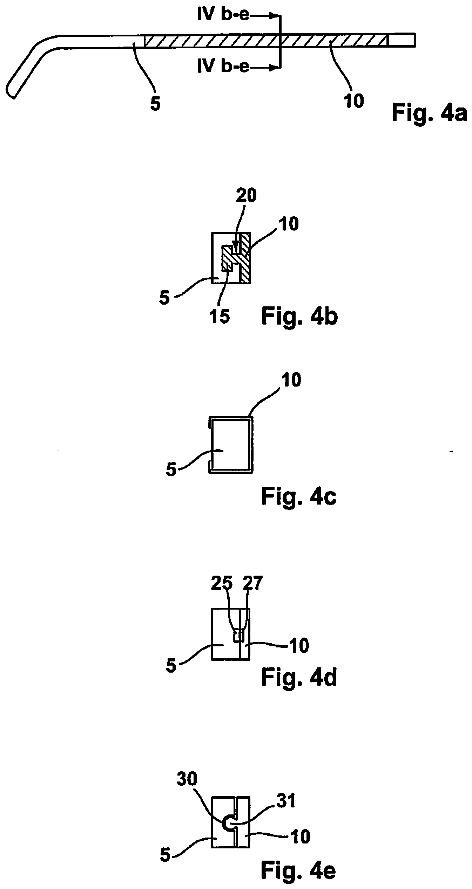

Betrachtet man nunmehr die Figuren 4a bis 4c, so ergeben sich dort die unterschiedlichsten Befestigungsarten für beispielsweise leistenförmige Zierelemente an dem Ohrbügel 5. Der Ohrbügel 5 als Haltevorrichtung weist gemäß Fig. 4b eine längsverlaufende T-förmige Nut 20 auf, wobei das Zierelement 10 korrespondierend hierzu mit einem T-förmigen Steg 15 ausgebildet ist, um von der T-förmigen Nut formschlüssig aufgenommen zu werden. Bei der Ausführungsform gemäß Fig. 4c umgreift das leistenförmige C-förmige Zierelement 10 den Ohrbügel klammerartig; hier kann das Zierelement auf den Ohrbügel aufgeschoben oder seitlich aufgeclipst werden. Bei der Ausführungsform gemäß Fig. 4d weist der Ohrbügel einen oder mehrere Magneten 25 auf, die mit einem oder mehreren Magneten 27 in dem leistenförmigen Zierelement 10 zusammenwirken.

Bei der Ausführungsform gemäß 4e schließlich weist der Ohrbügel 5 ein oder mehrere Ausnehmungen 30 auf, in die entsprechende Vorsprünge 31 des leistenförmigen Zierelementes 10 einpressbar sind.

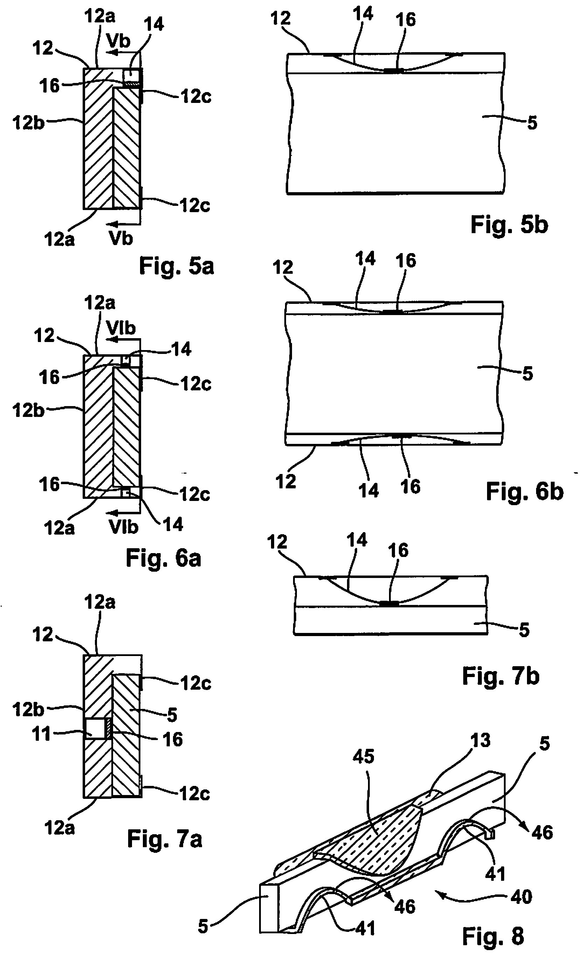

Bei den Ausführungsformen gemäß den Figuren 5a, 5b, 6a, 6b und 7a, 7b ist der Ohrbügel mit 5 bezeichnet und das leistenförmige Zierelement mit 12. Das leistenförmige Zierelement umgreift den Ohrbügel C-förmig, dass heißt, dass das leistenförmige Zierelement den Ohrbügel an den beiden gegenüberliegenden Schmalseiten 12a und auf der äußeren Breitseite 12b überdeckt; auf der Innenseite des Ohrbügels, also der Seite, die beim Tragen dem Kopf des Trägers zugewandt ist, sind Vorsprünge 12c vorgesehen, die den Ohrbügel 5 lediglich partiell überdecken, sodass das leistenförmige Zierelement sowohl auf den Ohrbügel aufgeschoben werden kann, als auch seitlich auf den Ohrbügel aufgeclipst werden kann.

Erkennbar ist das leistenförmige Zierelement 12 von seinen äußeren Abmessungen her im Querschnitt größer als der mit 5 bezeichnete Ohrbügel. Um insofern dennoch eine stabile Verbindung zwischen dem Ohrbügel einerseits und dem leistenförmigen Zierelement andererseits bewirken zu können, ist auf einer Schmalseite 12a des leistenförmigen Zierelementes 12 auf der Innenseite eine bogenförmig vorgespannte Blattfeder 14 angeordnet. Die Blattfeder, die an die leistenförmigen Zierelemente fixiert ist, weist im Bereich ihres Scheitelpunktes einen Puffer 16 auf, beispielsweise aus Schaumstoff oder Gummi, um ein unbeabsichtigtes Verschieben des leistenförmigen Zierelementes 12 auf dem Bügel zu verhindern, zumindest aber zu erschweren.

Die Ausführungsform gemäß den Figuren 6a und 6b unterscheidet sich von der gemäß Fig. 5a und 5b dadurch, dass zu beiden Seiten der Schmalseite des Ohrbügels jeweils eine entsprechende bogenförmig vorgespannte Blattfeder vorgesehen ist.

Alternativ kann bei der Ausführungsform gemäß Fig. 7a und 7b vorgesehen sein, dass die bogenförmig vorgespannte Blattfeder 14 an der Innenseite des leistenförmigen Zierelementes an dessen Breitseite angeordnet ist, und entsprechend sich die Blattfeder an der äußeren Breitseite des Ohrbügels abstützt. Auch hier kann ein Puffer 16 vorgesehen sein, mit dem die Blattfeder in Kontakt mit dem Ohrbügel 5 steht.

Grundsätzlich ist vorgesehen, dass mindestens eine solche Blattfeder über die Länge des Ohrbügels bzw. die Länge des leistenförmigen Zierelementes vorgesehen ist. Es ist allerdings auch denkbar, mehrere solcher Blattfedern hintereinander in dem leistenförmige Zierelement anzuordnen, um insbesondere eine parallele Ausrichtung des leistenförmigen Zierelementes auf dem Ohrbügel zu gewährleisten.

Die Ausführungsform gemäß der Figur 8 zeichnet sich dadurch aus, dass das Federelement als Federspange 40 ausgebildet ist, die an einer Längskante des als Leiste ausgebildeten Zierelements 13 angeordnet ist und die in Eingriff mit den Ohrbügel 5 der Brille 1 bringbar ist. Hierbei ist die Federspange 40 vom Zierelement abklappbar ausgebildet, was durch die Pfeile 46 verdeutlicht werden soll. Darüber hinaus weist die Federspange 40 zur Anlage an dem Ohrbügel mindestens einen Vorsprung 41 auf, um einen sicheren Sitz des Zierelements 13 an dem Ohrbügel 5 zu gewährleisten. Zum stabilen Sitz des leistenförmigen Zierelements 13 auf dem Ohrbügel 5 der Brille kann des Weiteren eine klammerartige Lasche an dem Zierelement 13 angeordnet sein, und zwar im Bereich der Federspange. Insofern ergibt sich aus Figur 8, dass die klammerartige Lasche 45 den Ohrbügel 5 von der einen, insbesondere der oberen Seite, erfasst, wohingegen die abklappbare Federspange 40 den Ohrbügel 5 von unten her ergreift. Die Abklappbarkeit der Federspange resultiert aus der Verwendung eines federnd nachgiebigen Materials, z. B. einem Federstahl.

### Bezugszeichenliste:

- 1: Brille
- 3: Brillengestell
- 4: Fassung
- 5: Ohrbügel
- 6: Steg
- 7: Brillenglas
- 9: Scharniergelenk
- 10: Zierelement
- 11: Zierelement
- 12: Zierelement
- 12a: Schmalseite des Zierelements
- 12b: Breitseite des Zierelements
- 12c: Vorsprung am Zierelement
- 13: Zierelement
- 14: Blattfeder
- 15: T-förmiger Steg
- 16: Puffer
- 20: Nut
- 25: Magnet
- 27: Magnet
- 30: Ausnehmung
- 31: Vorsprung
- 40: Federspange
- 41: Vorsprung an der Federspange
- 45: klammerartige Lasche
- 46: Pfeil

## Patentansprüche

1. Zierelement für ein Brillengestell einer Brille,
wobei das Zierelement (10, 11, 12, 13) lösbar an dem Brillengestell anordbar ist.

2. Zierelement nach Anspruch 1,
**dadurch gekennzeichnet,**
**dass** das Zierelement (10, 11, 12, 13) aufclipsbar, aufschiebbar oder magnetisch mit dem Brillengestell (3) verbindbar sind.

3. Zierelement nach einem der voranstehenden Ansprüche,
**dadurch gekennzeichnet,**
**dass** das Zierelement (10, 11, 12, 13) eine Leiste, ein Knopf oder ähnliches ist, das mit dem Brillengestell (3) lösbar verbindbar ist.

4. Zierelement nach einem der voranstehenden Ansprüche,
**dadurch gekennzeichnet,**
**dass** das leistenförmige Zierelement (12, 13) durch mindestens ein Federelement mit dem Ohrbügel (5) in Verbindung steht.

5. Zierelement nach Anspruch 4,
**dadurch gekennzeichnet,**
**dass** das mindestens eine Federelement sich längs des leistenförmigen Zierelementes (12) auf der Innenseite des Zierelements (12) erstreckt.

6. Zierelement nach Anspruch 4 oder Anspruch 5,
**dadurch gekennzeichnet,**
**dass** das leistenförmige Zierelement (12) den Ohrbügel (5) formschlüssig umgreifend erfasst, wobei das leistenförmige Zierelement (12) mindestens eine Breitseite (12b) aufweist, die mit den beiden einander gegenüberliegenden Schmalseiten (12a) verbunden ist.

7. Zierelement nach Anspruch 6,
**dadurch gekennzeichnet,**
**dass** das mindestens eine Federelement innen auf der Schmalseite (12a) und/oder auf der Breitseite (12b) des leistenförmigen Zierelementes (12) angeordnet ist.

8. Zierelement nach einem der Ansprüche 4 bis 7,
**dadurch gekennzeichnet,**
**dass** das Federelement mindestens eine Kontaktstelle zum Ohrbügel (5) aufweist, wobei an der Kontaktstelle das Federelement einen Puffer (16) aus elastisch nachgiebigem Material, z. B. Schaumstoff oder Gummi aufweist.

9. Zierelement nach einem der Ansprüche 4 bis 8,
**dadurch gekennzeichnet,**
**dass** das Federelement bogenförmig elastisch vorgespannt ist.

10. Zierelement nach einem der Ansprüche 4 bis 9,
**dadurch gekennzeichnet,**
**dass** das Federelement als Blattfeder (14) ausgebildet ist.

11. Zierelement nach Anspruch 4,
**dadurch gekennzeichnet,**
**dass** das Federelement als Federspange (40) ausgebildet ist, die an einer Längskante des als Leiste ausgebildeten Zierelements (13) angeordnet ist, und die in Eingriff mit dem Ohrbügel (5) der Brille (1) bringbar ist.

12. Zierelement nach Anspruch 11,
**dadurch gekennzeichnet,**
**dass** die Federspange (40) vom Zierelement (13) abklappbar ausgebildet ist.

13. Zierelement nach Anspruch 11 oder 12,
**dadurch gekennzeichnet,**
**dass** die Federspange (40) zur Anlage an dem Ohrbügel (5) mindestens einen Vorsprung (41) aufweist.

14. Zierelement nach einem der Ansprüche 11 bis 13,
**dadurch gekennzeichnet,**
**dass** an der anderen Längskante des als Leiste ausgebildeten Zierelements (13) eine klammerartige Lasche (45) zum Erfassen des Ohrbügels (5) angeordnet ist.

15. Brille (1) mit einem Brillengestell (3),
**gekennzeichnet durch**
mindestens ein Zierelement gemäß einem oder mehrerer der Ansprüche 1 bis 14.
